# EUROPÄISCHE PATENTSCHRIFT

(11) **EP 0 575 295 B1**
(45) Veröffentlichungstag und Bekanntmachung des Hinweises auf die Patenterteilung: **20.12.1995**
(21) Anmeldenummer: 93810426.2
(22) Anmeldetag: 14.06.1993
(51) Int. Cl.: F16B 13/00, F16B 25/10

(54) **Schraubhülse**
Screw-type sleeve
Manchon à vis

(30) Priorität: 18.06.1992 CH 1953/92
(43) Veröffentlichungstag der Anmeldung: 22.12.1993
(73) Patentinhaber: MUNGO BEFESTIGUNGSTECHNIK AG, CH-4603 Olten (CH)
(72) Erfinder: Bappert, Adolf, CH-4616 Kappel (CH); Schefer, Arnold, CH-4616 Kappel (CH)
(74) Vertreter: Quehl, Horst Max, Dipl.-Ing.

(56) Entgegenhaltungen:
- EP-A- 0 469 290
- DE-A- 3 003 280
- DE-C- 4 039 831
- GB-A- 2 101 022
- LU-A- 68 819
- US-A- 3 045 523

## Beschreibung

Die Erfindung betrifft eine Schraubhülse mit den Merkmalen des Oberbegriffs des Patentanspruchs 1.

Eine Schraubhülse der genannten Art ist bekannt durch die EP-A- 0 463 278. Diese bekannte Schraubhülse hat an ihrem vorderen Ende ein Vorbohrelement, das aus zwei am Ende des Hülsenkörpers sich anschliessenden, im spitzen Winkel gegeneinander gerichteten Bohrteilen besteht, so dass die Schraubhülse an ihrem vorderen Ende zwischen den Bohrteilen zwei Oeffnungen hat, in die das durch die Wirkung des Vorbohrelementes entstehende Bohrmehl zum Hülseninnenraum hin eindringen kann.

Durch die LU-A-68819 ist eine ohne Vorbohrelement ausgeführte Schraubhülse bekannt, die nach Art eines Spreizdübels über den grössten Teil ihrer Länge Schlitze aufweist, die durch mehrere Verbindungsstege überbrückt sind, so dass eine unkontrollierte Aufweitung durch eine einzudrehende Schraube verhindert wird. Durch Aufnahme von Bohrmehl erleichtern die Schlitze das Eindrehen der Schraubhülse in eine Gipswand.

Der Erfindung liegt die Aufgabe zugrunde, eine Schraubhülse der genannten Art zu finden, die sich durch eine gute Spanableitung und eine gute Bohrwirkung seines Vorbohrelementes leicht in ein weiches Baumaterial, wie z.B. Gipsplatten, einschrauben lässt.

Die Lösung dieser Aufgabe erfolgt erfindungsgemäss aufgrund der kennzeichnenden Merkmale des Patentanspruchs 1. Vorteilhafte Ausgestaltungen der erfindungsgemässen Schraubhülse sind Gegenstand der abhängigen Patentansprüche.

Im folgenden wird die Erfindung anhand eines in der Zeichnung dargestellten Ausführungsbeispieles näher beschrieben. Es zeigt, in vergrösserter Darstellung:

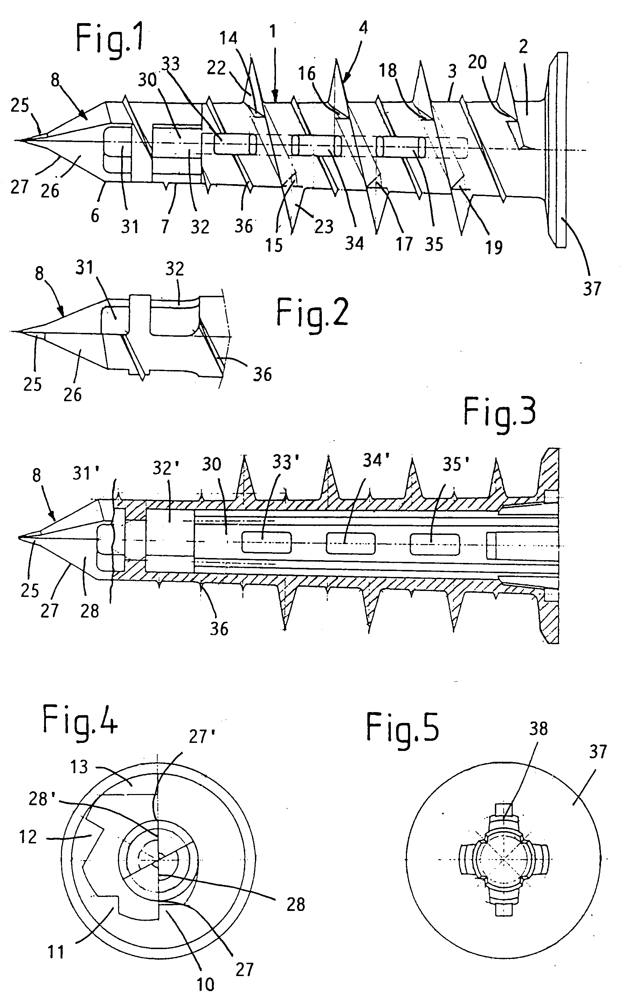

- Fig.1: eine Seitenansicht einer erfindungsgemässen Schraubhülse,
- Fig.2: eine Seitenansicht des vorderen Bereichs der Schraubhülse in um 90° gegenüber der Darstellung nach Fig.1 verdrehter Position,
- Fig.3: einen Axialschnitt der Schraubhülse nach Fig.1 mit ungeschnittener Darstellung der Vorbohrspitze,
- Fig.4: eine Ansicht in Achsrichtung des vorderen Endes der Schraubhülse nach Fig.1 und
- Fig.5: eine Aufsicht auf das hintere Ende der Schraubhülse nach Fig.1 .

Wie die Darstellungen zeigen, hat die Schraubhülse 1 einen Hülsenkörper 2 mit leicht konischer äusserer Umfangsfläche 3 und ein äusseres Schneidgewinde 4. Das Schneidgewinde 4 erstreckt sich mit ungefähr drei Gängen über den grösseren Teil der Länge der Umfangsfläche 5 und endet vorn mit wesentlichem Abstand von deren Endkante 6, so dass die Schraubhülse 1 einen schneidgewindefreien, vorderen Führungsbereich 7 hat, durch den sie in dem durch die Vorbohrspitze 8 vorbereiteten Loch geführt wird.

Der Flankenwinkel des äusseren Schneidgewindes 4 ist verhältnismässig spitz und der Steigungswinkel verhältnismässig klein. Ausserdem weist das Schneidgewinde 4 in seinem Anfangsbereich, indem sich sein Durchmesser spiralartig bis auf den Gewindeaussendurchmesser vergrössert, Unterbrechungen auf, die durch Ausschnitte 10 bis 13 gebildet sind, so dass sich eine fräserartige Schneidwirkung ergibt und Fördertaschen für die entstehenden Späne vorhanden sind. Eine gleichartige Wirkung wird durch zahlreiche spitzwinkelige Einkerbungen 14 bis 20 in beiden Gewindeflanken 22,23 erzielt, die zum äusseren Umfang des Schneidgewindes 4 hin spitz auslaufen.

Damit die Schraubhülse 1 ohne Benutzung eines separaten Bohrwerkzeuges, d.h. unmittelbar in eine aus weichem Baumaterial bestehende Wand, z.B. eine Gipswand o.dgl. eingebohrt und eingeschraubt werden kann, ohne ein Loch vorbohren zu müssen, ist am vorderen Ende des Hülsenkörpers 2 eine kurze, abgestufte Vorbohrspitze 8 angeformt. Die Abstufung ist durch zwei verschieden Spitzenwinkel gegeben, mit dem kleineren Spitzenwinkel von z.B. 30° am vordersten Spitzenteil 25 und einem grösseren Spitzenwinkel von z.B. 60° am hinteren Spitzenteil 26. Die Schneidkanten 27,27' der Vorbohrspitze 8 für drehendes Bohren ergeben sich durch mindestens angenähert radial, paarweise nach innen gerichtete, achsparallele Flächen 28,28' der massiven Vorbohrspitze 8. Entlang dieser Flächen 28,28' werden die entstehenden Bohrspäne nach innen zu dem Hülseninnenraum 30 hin abgeleitet.

Hinter der massiven Vorbohrspitze 8 schliesst sich der für die Aufnahme eines Befestigungsbolzens vorgesehene Hülsenraum 30 an. Da der Hülsenraum 30 nicht vollständig durch den nichtdargestellten Befestigungsbolzen ausgefüllt wird und da dieser ausserdem üblicherweise erst nach dem Einbohren der Schraubhülse 1 in eine Wand in diese eingeschraubt oder eingeschlagen wird, ist der Hülsenraum 30 zur Aufnahme von Bohrmehl geeignet, das das Einschrauben der Schraubhülse 1 behindern könnte. Hierzu sind in der Hülsenwand mehrere Oeffnungen 31 bis 35; 31' bis 35' vorgesehen, die in Hülsenlängsrichtung hintereinander angeordnet sind. Dabei sind die Oeffnungen 31,32; 31',32' in der Nähe der Vorbohrspitze wesentlich grösser ausgeführt.

Ausserdem ist die Hülsenaussenfläche 3 von einem Fördergewinde 36 umschlossen, durch das Bohrmehl zu den Oeffnungen 32 bis 35; 32'bis 35' hingefördert wird. Dieses Fördergewinde 36 hat einen erheblich kleineren Aussendurchmesser als das Schneidgewinde 4. Es beginnt am vorderen Ende der äusseren Umfangsfläche 3 der Schraubhülse 1 auf dem schneidgewindefreien Führungsbereich 7 und hat auf diesem mindestens einen Gewindegang.

Das Schneidgewinde 4 hat beispielsweise einen Aussendurchmesser, der doppelt so gross ist wie derjenige des Hülsenkörpers 2. Somit ergibt sich trotz der verhältnismässig geringen Länge des Hülsenkörpers 2 eine gute Verankerung im weichen Baumaterial. Ausserdem unterstützt dieses Schneidgewinde 4 die Vortriebskraft beim Einbohren der Schraubhülse 1 in ein Baumaterial.

Am hinteren Ende der Schraubhülse 1 ist ein Flansch37 angeformt, durch den sich die vollständig in eine Wand eingeschraubte Schraubhülse 1 an der Wandoberfläche abstützt.

Es versteht sich, dass ein zur Halterung bzw. Verankerung in der Schraubhülse 1 bestimmtes schaftförmiges Befestigungselement, wie z.B. ein Schraubenbolzen, in passender Länge zu der Schraubhülse 1 gewählt wird, so dass der Schraubenbolzen eine ausreichend tiefe Verankerung in dem Hülsenraum 30 findet, ohne an dem vorderen Bohrelement 7 einen Anschlag zu finden.

In dem Hülsenraum 30 der Schraubhülse 1 erstrecken sich, z.B. achsparallel und zueinander parallel, mehrere, beispielsweise vier, schmale im Querschnitt winkelförmige Rippen 21, in denen sich das Gewinde eines darin zu verankernden Schraubenbolzens einschneiden kann.

Am hinteren Ende hat der Hülsenraum 30 ausserdem kreuzweise angeordnete Aussparungen 38 für den Eingriff eines üblichen Werkzeuges zum Drehen einer Schraube.

## Patentansprüche

1. Schraubhülse für die Aufnahme eines schaftförmigen Befestigungselementes, mit einem einen spitzen Flankenwinkel aufweisenden, zum Eindrehen in weiches Baumaterial bestimmten Schneidgewinde (4), einer dem Eingriff eines Drehwerkzeuges dienenden Innenprofilierung am hinteren Ende der Schraubhülse (1) und mit einem fräserartigen Vorbohrelement (8) am vorderen Ende der Schraubhülse (1), wobei die Schraubenhülse im Bereich dieses vorderen Endes Oeffnungen (31) aufweist, dadurch gekennzeichnet, dass sich an eine Vorbohrspitze (8) des Vorbohrelementes ein schneidgewindefreier Führungsbereich (7) anschliesst, in Hülsenlängsrichtung hintereinander Oeffnungen (31-35) vorgesehen sind und Schneidkanten (27,27') der Vorbohrspitze (8) durch mindestens angenähert radial nach innen gerichtete, paarweise im Winkel zueinander angeordnete, achsparallele Flächen (28,28') gebildet sind, wobei diese Flächen (28,28') sich bis zu einer vorderen Oeffnung (31) der Schraubhülse (1) erstrecken.

2. Schraubhülse nach Anspruch 1, dadurch gekennzeichnet, dass von in Hülsenrichtung hintereinander angeordneten Oeffnungen (31-35) diejenigen in der Nähe der Vorbohrspitze (8) wesentlich grösser ausgeführt sind.

3. Schraubhülse nach Anspruch 1, gekennzeichnet durch ein zusätzlich zu dem Schneidgewinde (4) vorgesehenes, äusseres Fördergewinde (36), dessen Ganghöhe kleiner ist als die des Schneidgewindes (4).

4. Schraubhülse nach einem der Ansprüche 1 bis 3, dadurch gekennzeichnet, dass im Schneidgewinde (4) zumindestest im Bereich seiner vorderen, spiralartigen Durchmesservergrösserung Ausschnitte (10-13) vorgesehen sind.

5. Schraubhülse nach einem der Ansprüche 1 bis 4, gekennzeichnet durch Aussparungen (14-20) in den Flanken (22,23) des Schneidgewindes (4).

6. Schraubhülse nach Anspruch 5, dadurch gekennzeichnet, dass die Aussparungen (14-20) sich mit spitzwinkeligem Querschnitt in die Flanken (22,23) hineinerstrecken.

7. Schraubhülse nach Anspruch 5 oder 6, dadurch gekennzeichnet, dass die Aussparungen (14-20) an der Umfangsfläche (3) der Schraubhülse (1) am breitesten sind und zur Querschnittsspitze des Schneidgewindes (4) hin spitz auslaufen.

8. Schraubhülse nach einem der Ansprüche 1 bis 7, dadurch gekennzeichnet, dass ein vorderer, mindestens einen Gewindegang aufweisender Teil des Fördergewindes (36) in dem schneidgewindefreien Führungsbereich (7) der Schraubhülse (1) vorgesehen ist.

9. Schraubhülse nach einem der Ansprüche 1 bis 8, dadurch gekennzeichnet, dass die Vorbohrspitze (8) abgestuft ist, indem sie an einem vorderen Spitzenteil (25) einen kleineren Spitzenwinkel aufweist.

## Claims

1. Collet for receiving a shank-like fastening element, with a cutting thread (4) having an acute flank angle and intended for turning into soft building material, an inner profiling at the rear end of the collet (1) used for the engagement of a turning tool and with a mill-like predrilling element (8) at the front end of the collet (1), the collet having in the vicinity of said front end openings (31), characterized in that to a predrilling bit (8) of the predrilling element is connected a cutting thread-free guide area (7), in the sleeve longitudinal direction successively openings (31 to 35) are provided and cutting edges (27, 27') of the predrilling bit (8) are formed by at least approximately radially inwardly directed, axially parallel surfaces (28, 28') arranged pairwise at an angle to one another, said surfaces (28, 28') extending up to a front opening (31) of the collet (1).

2. Collet according to claim 1, characterized in that of the openings (31 to 35) successively arranged in the collet longitudinal direction, those in the vicinity of the predrilling bit (8) are much larger.

3. Collet according to claim 1, characterized by an outer feed thread (36), provided in addition to the cutting thread (4) and whose pitch height is smaller than that of the cutting thread (4).

4. Collet according to one of the claims 1 to 3, characterized in that in the cutting thread (4), at least in the vicinity of its front, spiral-like diameter enlargement, cutouts (10 to 13) are provided.

5. Collet according to one of the claims 1 to 4, characterized by recesses (14 to 20) in the flanks (22, 23) of the cutting thread (4).

6. Collet according to claim 5, characterized in that the recesses (14 to 20) extend with acute-angled cross-section into the flanks (22, 23).

7. Collet according to claim 5 or 6, characterized in that the recesses (14 to 20) on the circumferential surface (3) of the collet (1) are widest and taper to the cross-sectional tip of the cutting thread (4).

8. Collet according to one of the claims 1 to 7, characterized in that a front part of the feed thread (36) having at least one pitch is provided in the cutting thread-free guide area (7) of the collet (1).

9. Collet according to one of the claims 1 to 8, characterized in that the predrilling bit (8) is stepped, in that it has a smaller taper angle at a front bit part (25).

## Revendications

1. Manchon à vis pour la réception d'un élément de fixation en forme de tige, avec un filetage de coupe (4) présentant un angle de flanc aigu, destiné à la pénétration avec rotation dans un matériau de construction tendre, avec un profilage intérieur à l'extrémité arrière du manchon à vis (1) servant à l'engagement d'un outil de rotation et avec un élément de forage d'amorçage (8) du type fraise à l'extrémité avant du manchon à vis (1), le manchon à vis (1) présentant des ouvertures (31) dans la région de cette extrémité avant, caractérisé en ce qu'à une pointe de forage d'amorçage (8) de l'élément de forage d'amorçage se raccorde une portion de guidage (7) exempte de filetage de coupe, en ce que dans la direction longitudinale du manchon sont prévues des ouvertures successives (31-35) et en ce que les arêtes de coupe (27, 27') de la pointe de forage d'amorçage (8) sont constituées par des surfaces parallèles à l'axe (28, 28') au moins sensiblement dirigées radialement vers l'intérieur et associées par paires en angle l'une par rapport à l'autre, ces surfaces (28, 28') s'étendant jusqu'à une ouverture antérieure (31) du manchon à vis (1).

2. Manchon à vis suivant la revendication 1, caractérisé en ce que parmi les ouvertures (31-35) disposées en direction axiale du manchon l'une derrière l'autre, celles qui sont proches de la pointe de forage d'amorçage (8) sont de dimensions sensiblement plus grandes.

3. Manchon à vis suivant la revendication 1, caractérisé par un filetage de transport extérieur (36) prévu en complément au filetage de coupe (4), filetage (36) dont la hauteur de pas est inférieur à celle du filetage de coupe (4).

4. Manchon à vis suivant l'une quelconque des revendications de 1 à 3, caractérisé en ce que dans le filetage de coupe (4), tout au moins dans sa région antérieure où son diamètre est agrandi en spirale, sont prévues des découpes (10-13).

5. Manchon à vis suivant l'une quelconque des revendications de 1 à 4, caractérisé par des évidements (14-20) dans les flancs (22, 23) du filetage de coupe (4).

6. Manchon à vis suivant la revendication 5, caractérisé en ce que les évidements (14-20) s'étendent avec une section transversale à angle aigu dans les flancs (22, 23).

7. Manchon à vis suivant la revendication 5 ou la revendication 6, caractérisé en ce que les évidements (14-20) sont les plus larges à la surface périphérique (3) du manchon à vis (1) et aboutissent en ponte aiguë en direction de la pointe de la section transversale du filetage de coupe (4).

8. Manchon à vis suivant l'une quelconque des revendications de 1 à 7, caractérisé en ce qu'une partie antérieure présentant au moins une spire du filetage de transport (36) est prévue dans la zone de guidage (7) exempte de filetage de coupe du manchon à vis (1).

9. Manchon à vis suivant l'une quelconque des revendications de 1 à 8, caractérisé en ce qu'une pointe de forage d'amorçage (8) est étagée, par le fait qu'elle présente un angle de pointe plus petit dans une partie antérieure (25) de la pointe.
